# FASCICULE DE BREVET EUROPEEN

(11) **EP 2 131 402 B1**
(45) Date de publication et mention de la délivrance du brevet: **17.10.2018**
(21) Numéro de dépôt: 09007198.6
(22) Date de dépôt: 29.05.2009
(51) Int. Cl.: H02S 20/23, F24S 25/00, E04D 13/18

(54) **Toiture accueillant des panneaux photovoltaïques**
Dach aufnehmend photovoltaische Paneele
Roof receiving photovoltaic panels

(30) Priorité: 02.06.2008 FR 0853618
(43) Date de publication de la demande: 09.12.2009
(73) Titulaire: Profils Systemes, 34670 Baillargues (FR)
(72) Inventeur: Derre, Christophe, 30670 Aigues Vivies (FR); Reinert, Aymeric, 30670 Aigues Vives (FR)
(74) Mandataire: Godard, Xavier

(56) Documents cités:
- WO-A-99/10609
- DE-A1-102007 026 819
- FR-A- 2 467 925
- FR-A- 2 546 552
- JP-A- 2000 008 568
- JP-A- 2001 049 816
- JP-A- 2005 133 382
- US-A1- 2007 095 388

## Description

### DOMAINE D'APPLICATION DE L'INVENTION

Le domaine d'application de l'invention concerne les toitures et notamment les toitures susceptibles d'accueillir dans les meilleures conditions des panneaux solaires de type photovoltaïque.

### DESCRIPTION DE L'ART ANTÉRIEUR

Dans de très nombreuses configurations, les toitures accueillent les panneaux solaires à technologie photovoltaïque ou autre sur leur surface extérieure c'est à dire au-dessus de leur couverture.

Plus rarement, le panneau solaire est intégré à la toiture c'est à dire qu'il constitue lui-même la surface supérieure de la toiture.

Les panneaux solaires sont alors constitués par des boîtiers indépendants composés d'un encadrement qui sont soit préformés pour être intégrés à une charpente soit sont accueillis dans une charpente de toiture adaptée.

Afin d'assurer l'accueil et le support de tels boîtiers, la charpente est surdimensionnée et les éléments susceptibles d'assurer l'étanchéité entre la charpente et les cadres font que la surface utile pour la récupération de l'énergie solaire se trouve réduite.

Or, il existe des configurations de charpente qui ne peuvent pas être surdimensionnées telles celles mises en oeuvre pour les vérandas qui proposent des structures de charpentes légères supportant de grandes surfaces vitrées.

De plus, l'intégration d'un panneau solaire ne doit pas empêcher la couverture, dont il est alors un constituant, d'assurer les fonctions d'isolation à l'eau et à l'air. Or, des panneaux de type photovoltaïque requièrent, pour un fonctionnement optimal, une installation aérée autorisant le passage de l'air sur leurs différentes surfaces ce qui va à l'encontre de l'étanchéité qui doit être assurée par ailleurs.

Parmi les configurations de l'art antérieur, le document WO 99/10609 a pour objet des améliorations à des structures temporaires et démontables ne nécessitant pas de fondations tels des marquises, tentes, construction portables etc... décrit la possibilité d'intégrer dans les panneaux de toiture des panneaux solaires.

Le document JP 2001049816 décrit une solution de montage d'éléments de panneaux solaires sur une toiture qui fait apparaître que le cadre du panneau solaire vient en contact avec le panneau de toiture qui lui sert de surface d'appui linéaire continue. Cette configuration ne permet pas une aération optimale contribuant à un meilleur rendement des panneaux solaires.

Le document FR 2 546 552 décrit une enveloppe à paroi multiple isolée thermiquement et munie de moyens de récupération d'énergie solaire. Ce document propose pour accueillir le panneau solaire des surfaces d'appui linéaires continues préformées sur l'ensemble de la longueur du chevron.

### DESCRIPTION DE L'INVENTION

Ce que constatant, la demanderesse a mené des recherches afin d'optimiser l'intégration de panneaux solaires dans les toitures et notamment dans les toitures de véranda.

Cette intégration a notamment été étudiée pour des panneaux solaires de type photovoltaïque en cherchant une adéquation entre la fonction de couverture et l'aération nécessaire.

Un autre objet de l'invention est de proposer un montage susceptible d'accueillir des panneaux solaires d'épaisseurs différentes.

Ces recherches ont abouti à la conception d'une toiture particulièrement novatrice facilitant l'installation d'un panneau solaire sans surdimensionnement ou surépaisseur.

Selon l'invention, cette toiture comprenant une série de chevrons et des panneaux solaires, est remarquable en ce que les faces latérales en vis à vis d'au moins une paire de chevrons sont préformées et/ou équipées pour :
- former une surface d'appui à une ou plusieurs plaques de matériau isolant en partie inférieure,
- former une surface d'appui pour un ou plusieurs panneaux solaires en partie supérieure qui constituent la couverture de la toiture,
   les faces latérales en vis à vis desdits chevrons sont préformées de rainures accueillant des plots coopérant avec des équerres associées à la surface inférieure des panneaux solaires, lesdites équerres présentant une face horizontale fixée à la surface inférieure du panneau solaire et une face verticale coopérant avec ledit plot en étant ménagée d'une entaille verticale débouchant sur une lumière oblongue horizontale qui permet au panneau de s'engager verticalement sur les plots et de venir s'y verrouiller par un mouvement en translation,
- et lesdites surfaces d'appui étant disposées de façon à ménager un volume libre entre la surface supérieure du matériau isolant et la surface inférieure du panneau solaire en laissant un évidement avec la surface inférieure des panneaux solaires.

Le vide d'air en partie intermédiaire permet la ventilation entre la partie inférieure et la partie supérieure. Cette ventilation réduit la température sous le panneau photovoltaïque et par conséquent optimise le rendement du panneau.

De plus, selon l'invention, la couverture étanche à l'air et à l'eau est réalisée par le panneau inférieur, ce qui permet au panneau supérieur de bénéficier d'une aération optimale. Ainsi, dans cette configuration, c'est le panneau inférieur qui constitue la couverture réelle c'est à dire la barrière étanche à l'air et à l'eau. Les éléments assurant le positionnement et le maintien en position du panneau ne sont pas équipés ni dimensionnés pour assurer l'étanchéité. En conséquence, les panneaux solaires bénéficient de la quasi totalité de leur surface efficace d'exposition au rayonnement solaire.

Le chêneau est adapté pour venir récupérer aussi bien les eaux pluviales s'écoulant du plan supérieur défini par les panneaux solaires que celles écoulant sur le plan inférieur défini par les panneaux de matériau isolant.

Un tel dispositif de montage permet d'adapter une toiture de véranda à l'accueil des panneaux photovoltaïques dans de bonnes conditions techniques et esthétiques. De plus, l'utilisation de panneaux photovoltaïques qui présentent une faible épaisseur permet d'envisager l'accueil d'un panneau d'habillage supplémentaire se plaçant sous le panneau solaire et participant à l'isolation de l'ensemble.

La toiture peut comprendre en outre une ou plusieurs des caractéristiques ci-dessous décrites :
- elle comprend, fixés aux faces en vis à vis des chevrons, des moyens de maintien en position venant en vis à vis des surfaces d'appui,
- les faces latérales dudit chevron sont préformées de rainures accueillant des plots coopérant avec des équerres associées à la surface inférieure des panneaux solaires,
- la partie inférieure du chevron est équipée d'un profilé en T inversé dont la barre horizontale détend de part et d'autre du plan vertical défini par ledit chevron pour proposer ladite surface d'appui pour le matériau isolant,
- ladite forme en T est séparée de l'extrémité du corps du chevron au moyen d'au moins une baguette d'isolation thermique,
- les faces latérales dudit chevron sont préformées d'au moins une rainure accueillant un parclose constituant le moyen de maintien en position du matériau isolant,
- la partie supérieure du chevron accueille un profilé en T dont la barre horizontale s'étend de part et d'autre du plan vertical défini par ledit chevron pour venir recouvrir le bord du panneau solaire,
- lesdites équerres présentent une face horizontale fixée à la surface inférieure du panneau solaire et une face verticale coopérant avec ledit plot en étant ménagée d'une entaille verticale débouchant sur une lumière oblongue horizontale qui permet au panneau de s'engager verticalement sur les plots et de venir s'y' verrouiller par un mouvement en translation,
- et la liaison entre la partie supérieure du chevron et le profilé en T réalisant le recouvrement du bord du panneau solaire est constituée par un clipsage à plusieurs dentelures autorisant une pluralité de positions pour permettre le recouvrement d'épaisseurs différentes.

L'invention concerne également le chevron mettant en oeuvre ce montage ainsi que la véranda l'utilisant.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'une toiture conforme à l'invention.

### BRÈVE DESCRIPTION DES DESSINS

La figure 1 est un dessin schématique d'une vue en perspective d'un pan de toiture d'une véranda conforme à l'invention,
la figure 2 est un dessin schématique d'une vue avec les chevrons de profil d'une partie d'un pan de toiture,
la figure 3 est une vue de profil du chevron seul,
la figure 4 illustre l'assemblage des chevrons sur la poutre de faîtage,
la figure 5 illustre l'assemblage des chêneaux sur les chevrons.

### DESCRIPTION DES MODES DE RÉALISATION PRÉFÉRÉS

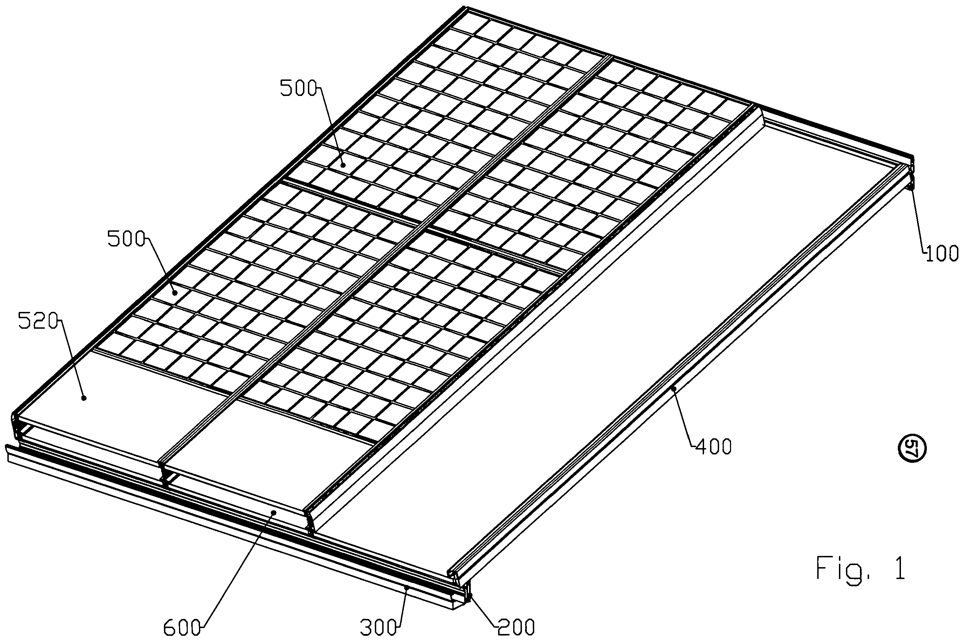

Tel qu'illustré sur le dessin de la figure 1, le pan de toiture de véranda adopte une charpente qui comprend une poutre de faîtage 100 ainsi qu'une poutre sablière 200 associée à un chêneau 300, une série de chevrons 400 venant reposer sur lesdites poutres.

Comme illustrés, ces chevrons 400 forment entre eux et dans le volume défini par leur hauteur, une zone d'accueil pour des panneaux solaires 500 qui constituent la couverture de la toiture. De plus, conformément à l'invention un panneau isolant 600 est placé entre les chevrons 400 en partie inférieure en laissant un évidement avec la surface inférieure des panneaux solaires 500.

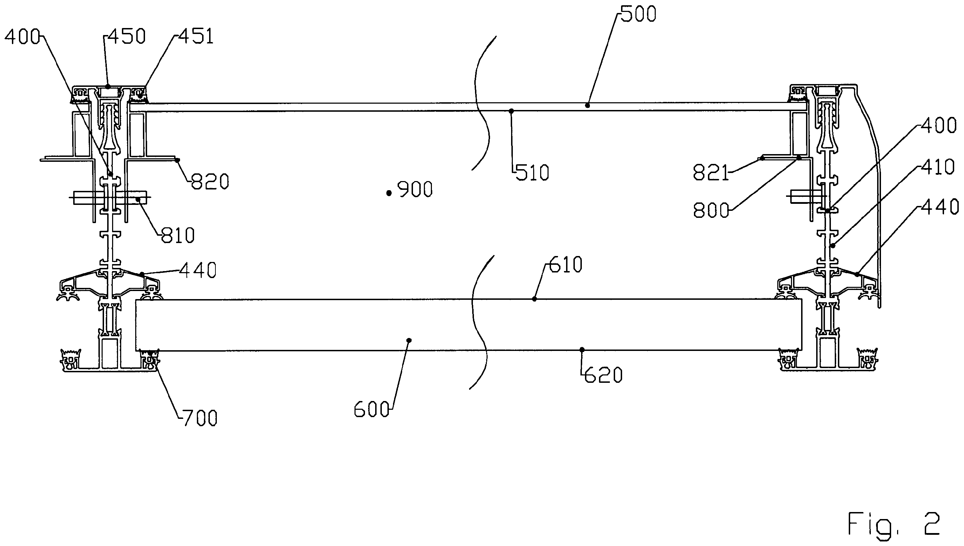

Comme illustré plus en détail sur le dessin de la figure 2, il comprend au moins une paire de chevrons profilés 400 dont les faces en vis à vis sont préformées et/ou équipées pour :
- former une surface d'appui 700 pour une ou plusieurs plaques de matériau isolant 600 en partie inférieure,
- former une surface d'appui 800 pour un ou plusieurs panneaux solaires 500 en partie supérieure,
- lesdites surfaces d'appui 700 et 800 étant disposées de façon à ménager un volume libre 900 entre la surface supérieure 610 du matériau isolant 600 et la surface inférieure 510 du panneau solaire 500.

Comme illustrées, ces surfaces d'appui sont positionnées dans le chevron de sorte que le panneau solaire 500 ainsi que le panneau d'isolation 600 sont sensiblement contenus dans l'épaisseur du parallèpipède défini entre les chevrons.

De plus, étant donné que les panneaux solaires sont susceptibles de présenter en association ou non des dimensions qui ne correspondent pas totalement aux dimensions de la couverture de la toiture, les chevrons 400 assurent également, selon la même surface d'appui que celles susceptibles d'accueillir les panneaux solaires, le support de panneaux d'habillage 520 venant en bas de couverture en prolongement des panneaux solaires 500 trop courts pour constituer la totalité de la surface de la couverture de la toiture de véranda.

Ce montage comprend également des moyens de maintien en position venant se fixer auxdites faces latérales 400 des chevrons en vis à vis desdites surfaces d'appui 700 et 800.

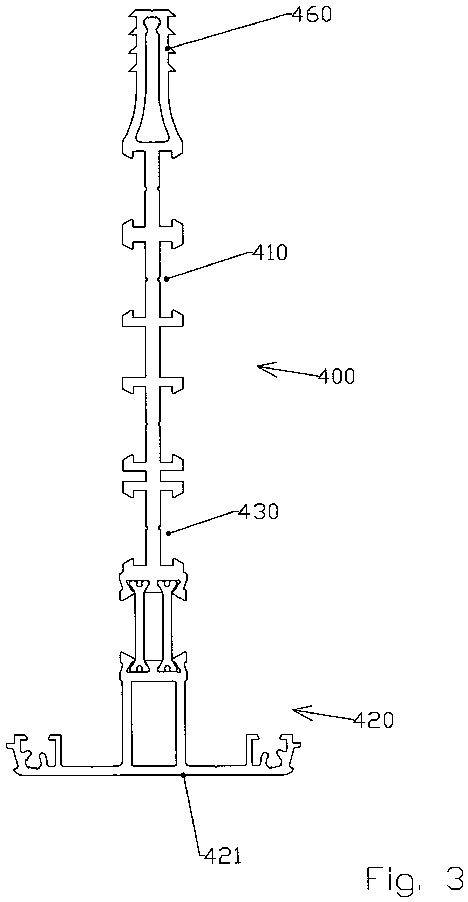

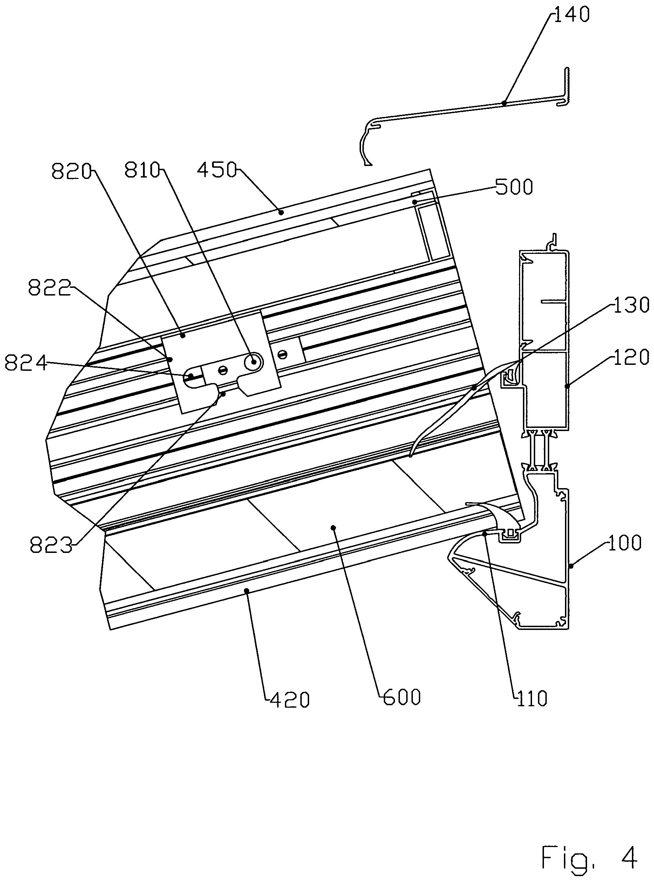

Comme illustré par les figures 2 et 3, le chevron 400 adopte une structure symétrique présentant un plan vertical ménagé sur ses deux faces de rainures identiques. Plus précisément, les faces latérales dudit chevron 400 sont préformées de rainures 410 longitudinales accueillant des plots 810 coopérant avec des équerres 820 associées à la surface inférieure des panneaux solaires 500. Ces plots 810 sont des cylindres disposés horizontalement c'est à dire perpendiculairement par rapport à la face verticale des chevrons 400. Comme illustrées sur le dessin de la figure 4, lesdites équerres 820 présentent une face horizontale 821 fixée à la surface inférieure du panneau solaire et une face verticale 822 coopérant avec ledit plot 810 en étant ménagée d'une entaille verticale 823 débouchant sur une lumière oblongue horizontale 824 qui permet au panneau 500 de s'engager verticalement sur les plots 810 et de venir s'y verrouiller par un mouvement en translation.

La partie inférieure du chevron 400 est équipée d'un profilé 420 en T inversé dont la barre horizontale 421 s'étend de part et d'autre du plan vertical défini par ledit chevron 400 pour proposer ladite surface d'appui 700 pour la surface inférieure 620 de la plaque inférieure 600 de matériau isolant.

Selon le mode de réalisation illustré et conformément à l'invention, ledit profilé 420 en T inversé est séparé de l'extrémité du corps du chevron 400 au moyen d'au moins une (ici deux) baguette d'isolation thermique. Ainsi, la partie de structure proposant un plan d'appui 700 au panneau d'isolant thermique 600 est elle-même isolée du reste du chevron 400.

Conformément à l'invention, les faces latérales dudit chevron 400 sont préformées d'au moins une rainure 430 accueillant un parclose 440 constituant le moyen de maintien en position du matériau isolant 600. Ce parclose 440 ainsi que le profilé 420 en T inversé participant à la tenue du matériau isolant sont équipés de joints pour assurer la fonction d'étanchéité à l'air et à l'eau de la toiture. Avantageusement, les différentes rainures 410, 430 préformées dans les faces du chevron adoptent les mêmes dimensions et le même profil afin de rendre flexible leur utilisation.

Selon une autre caractéristique particulièrement avantageuse, la partie supérieure du chevron 400 accueille un profilé en T 450 dont la barre horizontale 451 s'étend de part et d'autre du plan vertical défini par ledit chevron 400 pour venir recouvrir le bord du panneau solaire 500.

Comme illustrée, la liaison entre la partie supérieure du chevron 400 et le profilé en T 450 réalisant le recouvrement du bord du panneau solaire 500 est constituée par un clipsage à plusieurs dentelures 460 autorisant une pluralité de positions pour permettre le recouvrement d'épaisseurs différentes.
Cette caractéristique est particulièrement avantageuse en ce que les panneaux solaires ne présentent pas tous les mêmes épaisseurs.

Le chevron adopte une configuration étroite qui ne définit pas de surépaisseurs. En outre, étant donné que les moyens d'appui, de maintien en position et d'étanchéité sont situés sous le panneau solaire 500, il n'est pas utile de surdimensionner le profilé de recouvrement gardant ainsi libre la surface utile du panneau solaire. De plus, en définissant une surface d'appui inférieure prépositionnée, la réalisation du montage proposée est particulièrement aisée.

Comme illustrée sur le dessin de la figure 4, la poutre faîtière 100 présente une surface d'appui 110 pour les chevrons et supporte en partie supérieure un profilé supplémentaire 120 de forme rectangulaire susceptible de contenir divers équipements de connexion pour les panneaux solaires. Ce profilé supplémentaire 120 est lié à la poutre par au moins d'une baguette de rupture de pont thermique. Comme illustrée, la poutre de faîtage supporte le joint 130 constituant l'étanchéité de la toiture en partie supérieure. Comme illustré, conformément au fait que c'est le panneau inférieur 600 qui assure les fonctions de couverture étanche à l'eau et à l'air de la toiture de véranda, ce joint 130 ne vient pas recouvrir le panneau solaire 500 mais le panneau de matériau isolant 600. Afin de protéger la partie supérieure du pan de toiture, un larmier 140 vient surplomber l'extrémité haute des panneaux solaire 500.

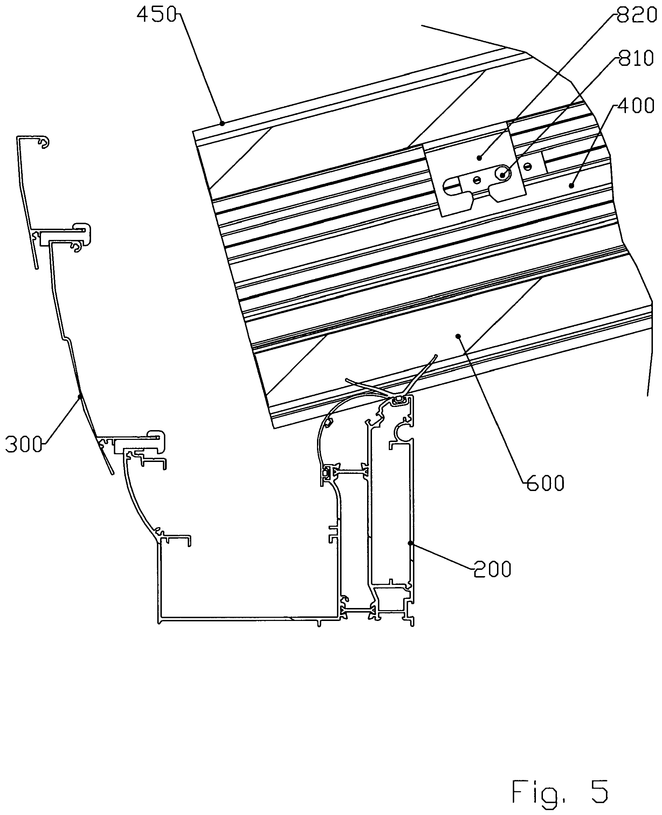

Comme illustré sur le dessin de la figure 5, le chêneau 300 présente des dimensions et notamment une hauteur de rebord susceptible à la fois d'accueillir les eaux pluviales provenant de la surface des panneaux de matériau isolant 600 mais également celles provenant de la surface définie par les panneaux solaires 500 associés ou non aux panneaux d'habillages 520. Comme illustrés, les panneaux d'habillage 520 utilisent les mêmes moyens de fixation à savoir les équerres 820 que ceux des panneaux solaires.

On comprend que la toiture qui vient d'être ci-dessus décrite et représentée, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Toiture comprenant une série de chevrons (400) et des panneaux solaires (500), **CARACTÉRISÉE PAR LE FAIT QUE** les faces en vis à vis d'au moins une paire de chevrons (400) sont préformées et/ou équipées pour :
- former une surface d'appui (700) à une ou plusieurs plaques de matériau isolant (600) en partie inférieure,
- former une surface d'appui (800) pour un ou plusieurs panneaux solaires (500) en partie supérieure qui constituent la couverture de la toiture,
les faces latérales en vis à vis desdits chevrons (400) sont préformées de rainures (410) accueillant des plots (810) coopérant avec des équerres (820) associées à la surface inférieure (510) des panneaux solaires (500), lesdites équerres (820) présentant une face horizontale (821) fixée à la surface inférieure (510) du panneau solaire (500) et une face verticale (822) coopérant avec ledit plot (810) en étant ménagée d'une entaille verticale (823) débouchant sur une lumière oblongue horizontale (824) qui permet au panneau (500) de s'engager verticalement sur les plots (810) et de venir s'y verrouiller par un mouvement en translation,
- et lesdites surfaces d'appui (700 et 800) étant disposées de façon à ménager un volume libre (900) entre la surface supérieure (610) du matériau isolant (600) et la surface inférieure (510) du panneau solaire (500) en laissant un évidement avec la surface inférieure des panneaux solaires (500).

2. Toiture selon la revendication 1, **CARACTÉRISÉE PAR LE FAIT QUE** les faces latérales dudit chevron (400) sont préformées d'au moins une rainure (430) accueillant un parclose (440) constituant le moyen de maintien en position du matériau isolant (600).

3. Toiture selon l'une quelconque des revendications précédentes, **CARACTÉRISÉE PAR LE FAIT QUE** la partie inférieure du chevron (400) est équipée d'un profilé en T (420) inversé dont la barre horizontale s'étend de part et d'autre du plan vertical défini par ledit chevron pour proposer ladite surface d'appui (700) pour le matériau isolant (600).

4. Toiture selon la revendication 3, **CARACTÉRISÉE PAR LE FAIT QUE** ladite forme en T (420) est séparée de l'extrémité du corps du chevron (400) au moyen d'au moins une baguette d'isolation thermique.

5. Toiture selon l'une quelconque des revendications précédentes, **CARACTÉRISÉE PAR LE FAIT QUE** la partie supérieure du chevron (400) accueille un profilé en T (450) dont la barre horizontale s'étend de part et d'autre du plan vertical défini par ledit chevron (400) pour venir recouvrir le bord du panneau solaire (500).

6. Toiture selon la revendication 5, **CARACTÉRISÉE PAR LE FAIT QUE** la liaison entre la partie supérieure du chevron (400) et le profilé en T (450) réalisant le recouvrement du bord du panneau solaire (500) est constituée par un clipsage à plusieurs dentelures (460) autorisant une pluralité de positions pour permettre le recouvrement d'épaisseurs différentes.

## Patentansprüche

1. Dach, umfassend eine Reihe von Sparren (400) und Solarpaneele (500), **dadurch gekennzeichnet, dass** die einander gegenüberliegenden Seiten zumindest eines Paares von Sparren (400) dazu vorgeformt und/oder ausgestattet sind:
- im unteren Teil eine Auflagefläche (700) für eine oder mehrere Platten aus isolierendem Material (600) auszubilden,
- im oberen Teil eine Auflagefläche (800) für ein oder mehrere Solarpaneele (500), welche die Abdeckung des Dachs bilden, auszubilden,
wobei die einander gegenüberliegenden lateralen Seiten der Sparren (400) mit Nuten (410) vorgeformt sind, die Noppen (810) aufnehmen, die mit Winkeln (820) zusammenwirken, die mit der unteren Fläche (510) der Solarpaneele (500) verbunden sind, wobei die Winkel (820) eine an der unteren Fläche (510) des Solarpaneels (500) befestigte horizontale Seite (821) und eine vertikale Seite (822) aufweisen, die dadurch mit dem Noppen (810) zusammenwirkt, dass sie mit einer vertikalen Kerbe (823) versehen ist, die in ein horizontales Langloch (824) mündet, das es dem Paneel (500) ermöglicht, vertikal in die Noppen (810) einzugreifen und sich dort durch eine translatorische Bewegung zu verriegeln,
- und wobei die Auflageflächen (700 und 800) so angeordnet sind, dass sie ein freies Volumen (900) zwischen der oberen Fläche (610) des isolierenden Materials (600) und der unteren Fläche (510) des Solarpaneels (500) unterbringen und eine Ausnehmung mit der unteren Fläche der Solarpaneele (500) lassen.

2. Dach nach Anspruch 1, **dadurch gekennzeichnet, dass** die lateralen Seiten des Sparrens (400) mit zumindest einer Nut (430) ausgebildet sind, die eine Halteleiste (440) aufnimmt, die das Mittel zum Halten der Position des isolierenden Materials (600) darstellt.

3. Dach nach einem der vorangehenden Ansprüche, **dadurch gekennzeichnet, dass** der untere Teil des Sparrens (400) mit einem umgekehrten T-Profil (420) ausgestattet ist, dessen horizontaler Balken sich auf beiden Seiten der durch den Sparren definierten Ebene erstreckt, um die Auflagefläche (700) für das isolierende Material (600) zu bieten.

4. Dach nach Anspruch 3, **dadurch gekennzeichnet, dass** die T-Form (420) durch zumindest eine Wärmeisolationsleiste vom Ende des Sparrenkörpers (400) getrennt ist.

5. Dach nach einem der vorangehenden Ansprüche, **dadurch gekennzeichnet, dass** der obere Teil des Sparrens (400) ein T-Profil (450) aufnimmt, dessen horizontaler Balken sich auf beiden Seiten der durch den Sparren (400) definierten Ebene erstreckt, um den Rand des Solarpaneels (500) zu bedecken.

6. Dach nach Anspruch 5, **dadurch gekennzeichnet, dass** die Verbindung zwischen dem oberen Teil des Sparrens (400) und dem T-Profil (450), das für die Abdeckung des Randes des Solarpaneels (500) sorgt, durch eine Schnappverbindung mit mehreren Auszahnungen (460) gebildet ist, die eine Mehrzahl von Positionen erlauben, um die Abdeckung verschiedener Dicken zuzulassen.

## Claims

1. Roof comprising a series of rafters (400) and solar panels (500), **CHARACTERIZED IN THAT** the faces pposite at least one pair of rafters (400) are preformed and/or equipped to:
- form a bearing surface (700) with one or more sheets of insulating material (600) in the bottom part,
- form a bearing surface (800) for one or more solar panels (500) in the top part which constitute the coverage of the roof,
the lateral faces opposite said rafters (400) are preformed with grooves (410) accommodating blocks (810) cooperating with brackets (820) associated with the bottom surface (510) of the solar panels (500), said brackets (820) having a horizontal face (821) fixed to the bottom surface (510) of the solar panel (500) and a vertical face (822) cooperating with said block (810) by a vertical notch (823) emerging on a horizontal oblong opening (824) which allows the panel (500) to be fitted vertically onto the blocks (810) and to be locked thereon by a translational movement,
- and said bearing surfaces (700 and 800) being disposed so as to form a free volume (900) between the top surface (610) of the insulating material (600) and the bottom surface (510) of the solar panel (500) by leaving a void with the bottom surface of the solar panels (500).

2. Roof according to Claim 1, **CHARACTERIZED IN THAT** the lateral faces of said rafter (400) are preformed with at least one groove (430) accommodating a cover strip (440) constituting the means for holding the insulating material (600) in position.

3. Roof according to either one of the preceding claims, **CHARACTERIZED IN THAT** the bottom part of the rafter (400) is equipped with an inverted T-shaped profile section (420) of which the horizontal bar extends on either side of the vertical plane defined by said rafter to offer said bearing surface (700) for the insulating material (600).

4. Roof according to Claim 3, **CHARACTERIZED IN THAT** said T-shape (420) is separated from the end of the body of the rafter (400) by means of at least one thermal insulation stick.

5. Roof according to any one of the preceding claims, **CHARACTERIZED IN THAT** the top part of the rafter (400) accommodates a T-shaped profile section (450) of which the horizontal bar extends on either side of the vertical plane defined by said rafter (400) to cover the edge of the solar panel (500).

6. Roof according to Claim 5, **CHARACTERIZED IN THAT** the link between the top part of the rafter (400) and the T-shaped profile section (450) producing the overlap of the edge of the solar panel (500) is formed by a snap-fitting with a number of serrations (460) allowing a plurality of positions to allow the overlapping of different thicknesses.
